# EUROPEAN PATENT SPECIFICATION

(11) **EP 2 779 508 B1**
(45) Date of publication and mention of the grant of the patent: **24.10.2018**
(21) Application number: 12857968.7
(22) Date of filing: 08.12.2012
(51) Int. Cl.: H04L 1/00, H04L 1/16

(54) **METHOD AND DEVICE FOR OBTAINING CHANNEL STATE INFORMATION**
VERFAHREN UND VORRICHTUNG FÜR DEN ERHALT VON KANALSTATUSINFORMATIONEN
PROCÉDÉ ET DISPOSITIF PERMETTANT D'OBTENIR DES INFORMATIONS D'ÉTAT DE CANAL

(30) Priority: 14.12.2011 CN 201110418223
(43) Date of publication of application: 17.09.2014
(73) Proprietor: Huawei Technologies Co., Ltd., Longgang District Shenzhen, Guangdong 518129 (CN)
(72) Inventor: XIA, Liang, Shenzhen Guangdong 518129 (CN); ZHOU, Mingyu, Shenzhen Guangdong 518129 (CN)
(74) Representative: Gill Jennings & Every LLP
(86) International application number: PCT/CN2012/086235
(87) International publication number: WO 2013/086954

(56) References cited:
- EP-A2- 2 197 125
- WO-A1-2011/041759
- WO-A1-2011/126025
- WO-A2-2011/145886
- CN-A- 101 834 707
- CN-A- 101 834 707
- CN-A- 102 026 280
- CN-A- 102 149 130

## Description

### TECHNICAL FIELD

The present invention relates to the field of communications system, and in particular, to a method and an apparatus for obtaining channel state information.

### BACKGROUND

In a conventional wireless communications system, each user equipment (User Equipment, UE) usually receives data and signaling information sent from one cell only, where each cell includes one or more transmission points having a transmitting and receiving apparatus. One transmission point having a transmitting and receiving apparatus may correspond to one or more antennas. Persons skilled in the art may easily understand that a "cell" or a "transmission point corresponding to the cell" in the following indicate the same meaning.

Usually, to enable a base station to perform reasonable scheduling, the base station needs to learn channel state information (Channel State Information, CSI) of a wireless channel between a transmission point and a UE. The UE usually measures a reference signal (Reference Signal, RS) sent by the transmission point, and feeds back a measurement result to the base station, so as to obtain the information, for example, CIS-RS in an LTE-Advanced (further advancement of LTE) system,. In a CoMP (Coordinated Multiple Point transmission/reception, coordinated multiple point transmission/reception) system, to enable multiple transmission points to perform reasonable coordination, a base station in charge of scheduling needs to learn CSI of wireless channels between the multiple transmission points and the UE.

In the prior art, a base station sends information of one RS pattern and information of a group of RS available resources to a UE; on a first resource, a transmission point 1 sends an RS according to the RS pattern, and a transmission point 2 sends an RS not according to the RS pattern, where the first resource is a non-empty subset of the group of RS available resources; and on a second resource, the transmission point 2 sends the RS according to the RS pattern, and the transmission point 1 sends the RS not according to the RS pattern, where the second resource is a non-empty subset of the group of RS available resources. The UE measures the RSs on the two resources according to the RS pattern, and feeds back a measurement result; and the base station receives the measurement result fed back by the UE to obtain CSI between the transmission point 1 and the UE and CSI between the transmission point 2 and the UE.

In the prior art, obtaining CSI of wireless channels between different transmission points and a UE can be implemented. However, CSI on two resources is fed back to a base station by sharing the same feedback mechanism; as a result, a problem that when a user equipment feeds back CSI to a base station, a feedback mechanism is inflexible is caused.

CN 101834707 A, CN 102149130 A, WO 2011/145886 A2, WO 2011/126025 A1, and WO 2011/041759 A1 are examples of approaches to measuring CSI where the measurement results are fed back using the same feedback mechanism.

### SUMMARY

Embodiments of the present invention provide a method and an apparatus for obtaining channel state information, so as to solve a problem that a feedback mechanism is inflexible when obtaining CSI of wireless channels between different transmission points and a user equipment is implemented.

The embodiments of the present invention adopt the following technical solutions.

A method for obtaining channel state information includes:
receiving, by a user equipment, at least two channel state information CSI measurement reference resource sets sent by a base station, where reference signal RS resources included in different CSI measurement reference resource sets are different, RSs included in the different CSI measurement reference resource sets have different RS characteristics, and RSs included in the same CSI measurement reference resource set have the same RS characteristic;
measuring, by the user equipment according to each CSI measurement reference resource set of the at least two CSI measurement reference resource sets, CSI corresponding to each CSI measurement reference resource set, and obtaining a feedback mechanism corresponding to each CSI measurement reference resource set such that the feedback mechanism corresponding to a first CSI measurement reference resource set differs from the feedback mechanism corresponding to a second CSI measurement reference resource set; and
feeding back, by the user equipment, a measurement result to the base station through the feedback mechanism corresponding to the CSI measurement reference source set corresponding to the measurement result, where the measurement result is CSI between the user equipment and any one or a combination of transmission points among at least two transmission points each corresponding to each CSI measurement reference resource set, and the transmission point corresponds to one or more antennas;
wherein after the receiving, by the user equipment, at least two channel state information CSI measurement reference resource sets sent by a base station, the method further comprises:
   when the measurement result that needs to be fed back by the user equipment to the base station through the feedback mechanism is CSI between the user equipment and a transmission point combination, receiving, by the user equipment, an RS configuration that is sent by the base station and corresponds to each channel state information CSI measurement reference resource set of the at least two channel state information CSI measurement reference resource sets, wherein the RS configuration comprises at least one of the following information: the number of RS antenna ports, an RS pilot pattern, an RS period, and an RS sub-frame offset; and
   wherein the measuring, by the user equipment according to each CSI measurement reference resource set of the at least two CSI measurement reference resource sets, CSI corresponding to each CSI measurement reference resource set, and obtaining a feedback mechanism corresponding to each CSI measurement reference resource set comprises:
      measuring, by the user equipment according to each CSI measurement reference resource set and the RS configuration corresponding to each CSI measurement reference resource set, CSI between the user equipment and the transmission point combination corresponding to each CSI measurement reference resource set, and obtaining a feedback mechanism satisfying a requirement of the CSI between the user equipment and the transmission point combination.

A user equipment includes:
a receiving unit, configured to receive at least two channel state information CSI measurement reference resource sets sent by a base station, where reference signal RS resources included in different CSI measurement reference resource sets are different, RSs included in the different CSI measurement reference resource sets have different RS characteristics, and RSs included in the same CSI measurement reference resource set have the same RS characteristic;
a measurement obtaining unit, configured to measure, according to each CSI measurement reference resource set of the at least two CSI measurement reference resource sets received by the receiving unit, CSI corresponding to each CSI measurement reference resource set, and obtain a feedback mechanism corresponding to each CSI measurement reference resource set such that the feedback mechanism corresponding to a first CSI measurement reference resource set differs from the feedback mechanism corresponding to a second CSI measurement reference resource set; and
a feedback unit, configured to feed back a measurement result to the base station through the feedback mechanism obtained by the measurement obtaining unit, the feedback mechanism corresponding to the CSI measurement reference source set corresponding to the measurement result, where the measurement result is CSI between the user equipment and any one or a combination of transmission points among at least two transmission points each corresponding to each CSI measurement reference resource set, and the transmission point corresponds to one or more antennas;
wherein the receiving unit is further configured to, when the measurement result that needs to be fed back by the feedback unit to the base station through the feedback mechanism obtained by the measurement obtaining unit is CSI between the user equipment and a transmission point combination, receive an RS configuration that is sent by the base station and corresponds to each CSI measurement reference resource set of the at least two CSI measurement reference resource sets, wherein the RS configuration comprises at least one of the following information: the number of RS antenna ports, an RS pilot pattern, an RS period, and an RS sub-frame offset; and
the measurement obtaining unit is further configured to measure, according to each CSI measurement reference resource set received by the receiving unit and the RS configuration corresponding to each CSI measurement reference resource set, CSI between the user equipment and the transmission point combination corresponding to each CSI measurement reference resource set, and obtain a feedback mechanism satisfying a requirement of the CSI between the user equipment and the transmission point combination.

Another method for obtaining channel state information includes:
sending, by a base station, at least two channel state information CSI measurement reference resource sets to a user equipment, so that the user equipment measures, according to each CSI measurement reference resource set of the at least two CSI measurement reference resource sets, CSI corresponding to each CSI measurement reference resource set, and obtains a feedback mechanism corresponding to each CSI measurement reference resource set such that the feedback mechanism corresponding to a first CSI measurement reference resource set differs from the feedback mechanism corresponding to a second CSI measurement reference resource set; and
receiving, by the base station, a measurement result that is fed back by the user equipment through the feedback mechanism corresponding to the CSI measurement reference source set corresponding to the measurement result, where the measurement result is CSI between the user equipment and any one or a combination of transmission points among at least two transmission points each corresponding to each CSI measurement reference resource set, and the transmission point corresponds to one or more antennas;
wherein after the sending, by a base station, at least two channel state information CSI measurement reference resource sets to a user equipment, the method further comprises:
   when the measurement result that needs to be fed back by the user equipment to the base
   station through the feedback mechanism is CSI between the user equipment and a transmission point combination, sending, by the base station, an RS configuration corresponding to each channel state information CSI measurement reference resource set of the at least two channel state information CSI measurement reference resource sets to the user equipment, so that the user equipment measures, according to each CSI measurement reference resource set and the RS configuration corresponding to each CSI measurement reference resource set, CSI between the user equipment and the transmission point combination corresponding to each CSI measurement reference resource set, and obtains a feedback mechanism satisfying a requirement of the CSI between the user equipment and the transmission point combination.

Abase station includes:
a sending unit, configured to send at least two channel state information CSI measurement reference resource sets to a user equipment, so that the user equipment measures, according to each CSI measurement reference resource set of the at least two CSI measurement reference resource sets, CSI corresponding to each CSI measurement reference resource set, and obtains a feedback mechanism corresponding to each CSI measurement reference resource set such that the feedback mechanism corresponding to a first CSI measurement reference resource set differs from the feedback mechanism corresponding to a second CSI measurement reference resource set; and
a receiving unit, configured to receive a measurement result that is fed back to the receiving unit by the user equipment through the feedback mechanism obtained by the user equipment, the feedback mechanism corresponding to the CSI measurement reference source set corresponding to the measurement result, where the measurement result is CSI between the user equipment and any one or a combination of transmission points among at least two transmission points each corresponding to each CSI measurement reference resource set, and the transmission point corresponds to one or more antennas;
wherein the sending unit is further configured to, when the measurement result that needs to be fed back by the user equipment to the receiving unity through the feedback mechanism is CSI between the user equipment and a transmission point combination, sending, by the receiving unit, an RS configuration corresponding to each channel state information CSI measurement reference resource set of the at least two channel state information CSI measurement reference resource sets to the user equipment, so that the user equipment measures, according to each CSI measurement reference resource set and the RS configuration corresponding to each CSI measurement reference resource set, CSI between the user equipment and the transmission point combination corresponding to each CSI measurement reference resource set, and obtains a feedback mechanism satisfying a requirement of the CSI between the user equipment and the transmission point combination.

With the method and apparatus for obtaining channel state information provided in the embodiments of the present invention, first of all, a user equipment receives at least two channel state information CSI measurement reference resource sets sent by a base station; then, the user equipment measures, according to each CSI measurement reference resource set of the at least two channel state information CSI measurement reference resource sets, CSI between the user equipment and a transmission point and/or a transmission point combination corresponding to each CSI measurement reference resource set, and obtains the same or different feedback mechanisms satisfying a requirement of the CSI between the user equipment and the transmission point and/or the transmission point combination; and finally, the user equipment feeds back a measurement result to the base station through the same or different feedback mechanisms. In the prior art, CSI between a user equipment and different transmission points can be measured, but a feedback mechanism is inflexible when the user equipment feeds back a measurement result to a base station. In the solutions provided in the embodiments of the present invention, a user equipment adjusts a feedback mechanism according to different requirements on the feedback mechanism of CSI between the user equipment and different transmission points corresponding to CSI measurement reference resource sets sent by a base station, thereby solving a problem that a feedback mechanism is inflexible when a user equipment feeds back a measurement result to a base station in the prior art.

### BRIEF DESCRIPTION OF DRAWINGS

To describe the technical solutions in the embodiments of the present invention more clearly, the accompanying drawings required for describing the embodiments or the prior art are introduced briefly in the following. Apparently, the accompanying drawings in the following description only show some of the embodiments of the present invention, and persons of ordinary skill in the art may also obtain other drawings according to these accompanying drawings without creative efforts.
FIG. 1 is a flow chart of a method for obtaining channel state information according to an embodiment of the present invention;
FIG. 2 is a schematic structural diagram of a user equipment according to an embodiment of the present invention;
FIG. 3 is a flow chart of another method for obtaining channel state information according to an embodiment of the present invention;
FIG. 4 is a schematic structural diagram of a base station according to an embodiment of the present invention;
FIG. 5 is a configuration diagram of a sending time point of a reference signal according to an embodiment of the present invention;
FIG. 6 is a pattern of an RS sent by a transmission point 1 on a first RS resource according to an embodiment of the present invention;
FIG. 7 is a pattern of an RS sent by a transmission point 2 on a first RS resource according to an embodiment of the present invention;
FIG. 8 is a pattern of an RS sent by a transmission point 1 on a second RS resource according to an embodiment of the present invention;
FIG. 9 is a pattern of an RS sent by a transmission point 2 on a second RS resource according to an embodiment of the present invention;
FIG. 10 is a pattern of an RS sent by a transmission point 1 on a first RS resource according to an embodiment of the present invention;
FIG. 11 is a pattern of an RS sent by a transmission point 1 on a second RS resource according to an embodiment of the present invention; and
FIG. 12 is a pattern of an RS sent by a transmission point 2 on a second RS resource according to an embodiment of the present invention.

### DESCRIPTION OF EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. All other embodiments obtained by persons skilled in the art based on the embodiments of the present invention without creative efforts shall fall within the protection scope of the present invention.

To make advantages of the technical solutions of the present invention clearer, the present invention is described in detail in the following with reference to the accompanying drawings and the embodiments.

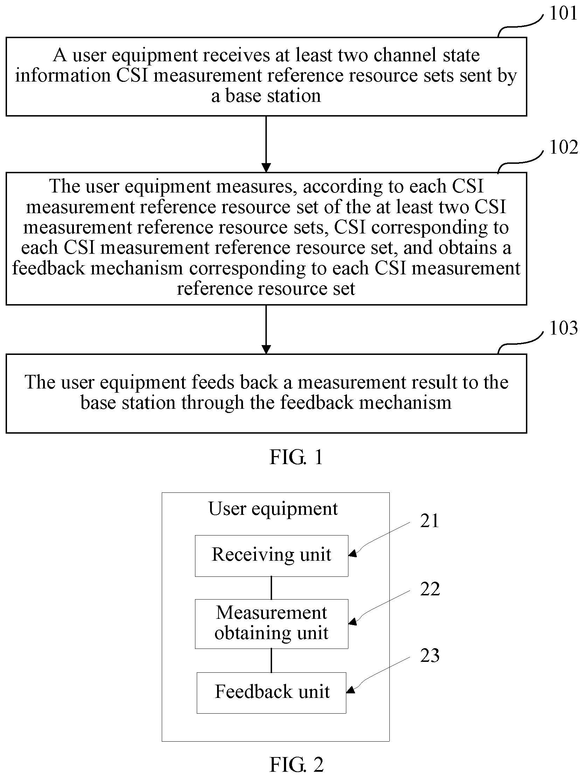

FIG. 1 shows a method for obtaining channel state information according to an embodiment of the present invention, and the method includes:
101: A user equipment receives at least two channel state information CSI measurement reference resource sets sent by a base station.

Reference signal RS resources included in different CSI measurement reference resource sets are different; and RSs included in the different CSI measurement reference resource sets have different RS characteristics, and RSs included in the same CSI measurement reference resource set have the same RS characteristic. The RS resource is a time dimension resource (such as a sub-frame) or a frequency dimension resource (such as a sub-band) including an RS; the RS characteristic includes a transmission point that sends the RS, and a configuration of the RS; and the configuration of the RS includes the number of RS antenna ports, an RS pilot pattern, an RS period, and an RS sub-frame offset.

102: The user equipment measures, according to each CSI measurement reference resource set of the at least two CSI measurement reference resource sets, CSI corresponding to each CSI measurement reference resource set, and obtains a feedback mechanism corresponding to each CSI measurement reference resource set.

Different CSI measurement reference resource sets in the at least two CSI measurement reference resource sets correspond to the same or different feedback mechanisms. The feedback mechanism may include a feedback mode, a feedback period, a frequency domain granularity, feedback triggering signaling, and the like.

103: The user equipment feeds back a measurement result to the base station through the feedback mechanism.

The measurement result may be CSI between the user equipment and any one or a combination of transmission points among at least two transmission points each corresponding to each CSI measurement reference resource set; and the transmission point is a device providing a service for the user equipment, and specifically, the transmission point may be a device such as an antenna.

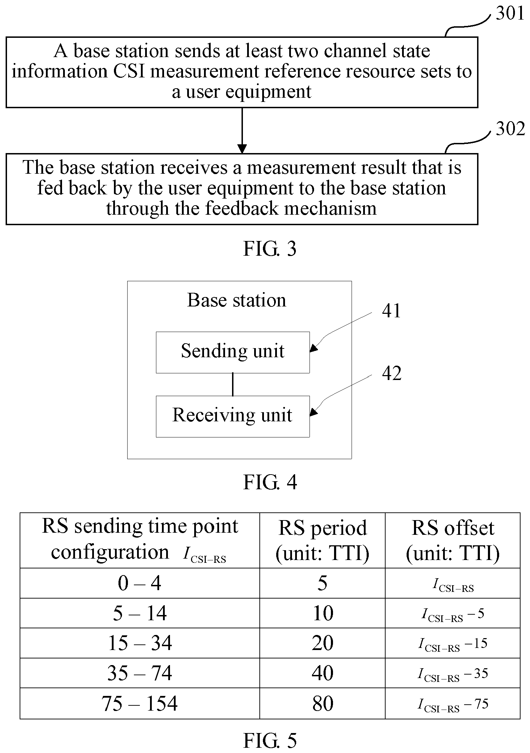

For example, two transmission points exist, which are a transmission point 1 and a transmission point 2. Multiple RS sending time point configurations are defined in the prior art. As shown in FIG. 5, when an RS sending time point configuration *I*_{CSI-RS} is 36, an RS period is 40 transmission time intervals TTI, and an RS offset is 1, which indicates that the RS is sent on TTIs at time points of 1, 41, 81, 121, and the like. In this example, the RS sending time point configuration *I*_{CSI-RS} that the base station configures for the UE is 0, which indicates that the RS period is 5 TTIs, and the RS offset is 0, that is, the RS is sent on TTIs at time points of 0, 5, 10, 15, and the like. An RS pattern that the base station configures for the UE is two REs: (9, 5) and (9, 6). The RS pattern represents an RS sending time point and frequency point (referred to as a time-frequency grid point). A TTI serves as a time unit for sending of a signal. The length of one TTI is 1 ms, including 14 symbols. One physical resource block (Physical Resource Block, PRB) is 12 sub-carriers within one TTI. Each sub-carrier on each symbol is referred to as one resource element (Resource Element, RE). Therefore, one PRB includes 12×14 REs, and each group of REs (including one or more REs) may be represented through (k, 1).

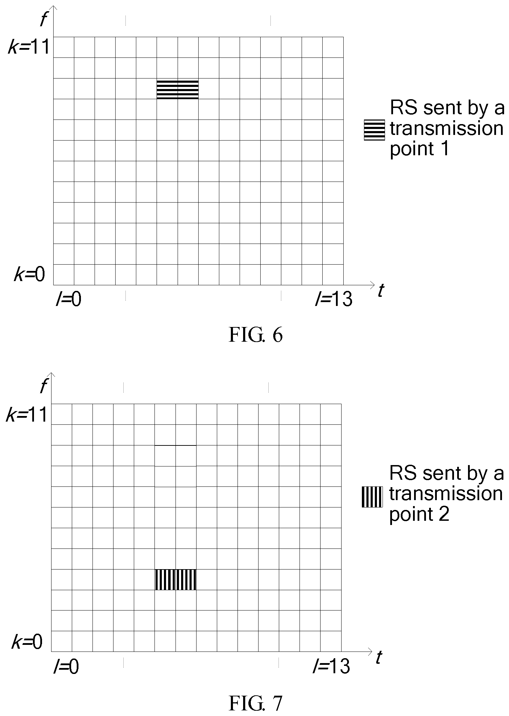

On TTIs whose serial numbers are 0, 10, 20, ..., (a first RS resource), patterns of RSs sent by the transmission point 1 and the transmission point 2 are as shown in FIG. 6 and FIG. 7. For the same physical resource block PRB, the pattern of the RS sent by the transmission point 1 is two REs: (9, 5) and (9, 6), and the pattern of the RS sent by the transmission point 2 is two REs: (3, 5) and (3, 6).

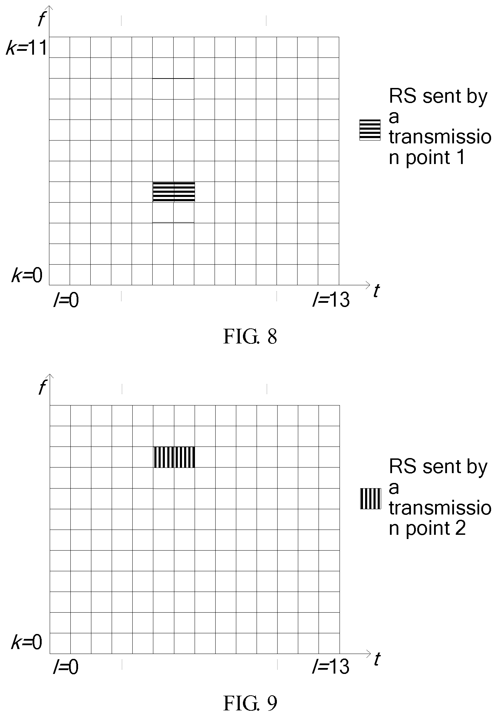

On TTIs at the time points of 5, 15, 25, ..., (a second RS resource), patterns of RSs sent by the transmission point 1 and the transmission point 2 are as shown in FIG. 8 and FIG. 9. For the same PRB, the pattern of the RS sent by the transmission point 1 is two REs: (4, 5) and (4, 6), and the pattern of the RS sent by the transmission point 2 is two REs: (9, 5) and (9, 6).

An RS measured by the UE on the TTIs at the time points of 0, 10, 20, ..., and on the two REs (9, 5) and (9, 6), which form the pattern of the RS, is sent from the transmission point 1, while the TTIs at the time points of 0, 10, 20, ..., belong to a first CSI measurement reference resource set. Therefore, the UE can obtain first CSI between the transmission point 1 and the UE, and feed back the first CSI according to a feedback mechanism of the first CSI measurement reference resource set. An RS measured on the TTIs at the time points of 5, 15, 25, ..., and on the two REs (9, 5) and (9, 6), which form the pattern of the RS, is sent from the transmission point 2, while the TTIs at the time points of 5, 15, 25, ..., belong to a second CSI measurement reference resource set. Therefore, the UE can obtain second CSI between the transmission point 2 and the UE, and feed back the second CSI according to a feedback mechanism of the second CSI measurement reference resource set.

Specifically, the first CSI measurement reference resource set may be indicated by using a bitmap. Each bit of the bitmap corresponds to each TTI or TTI set. For example, if a value of a bit is "1", it indicates that a TTI or TTI set corresponding to the bit belongs to the first CSI measurement reference resource set; and if a value of a bit is "0", it indicates that a TTI or TTI set corresponding to the bit does not belong to the first CSI measurement reference resource set. The TTI set may be all TTIs within one RS period. Further, the second CSI measurement reference resource set may also be indicated by using a bitmap, and a specific method is similar to that of the first CSI measurement reference resource set, which is not described herein again.

For example, the length of the bitmap is 40 bits, which correspond to 40 consecutive TTIs. The first CSI measurement reference resource set may be represented by (10000 00000 10000 00000 10000 00000 10000 00000), or represented by (11111 00000 11111 00000 11111 00000 11111 00000).

When an RS resource adopts a frequency dimension, a method is similar to the foregoing method of the time dimension, as long as a TTI is replaced with a PRB, and a time point is replaced with a frequency.

Optionally, when the measurement result that needs to be fed back by the user equipment to the base station through the feedback mechanism is CSI between the user equipment and a transmission point combination, after receiving each CSI measurement reference resource set of the at least two channel state information CSI measurement reference resource sets sent by the base station, the user equipment further receives an RS configuration corresponding to each CSI measurement reference resource set, where the RS configuration includes at least one of the following information: the number of RS antenna ports, an RS pilot pattern, an RS period, and an RS sub-frame offset.

An RS pattern represents an RS sending time point and frequency point (referred to as a time-frequency grid point). A TTI serves as a time unit for sending of a signal. The length of one TTI is 1 ms, including 14 symbols. One physical resource block (Physical Resource Block, PRB) is 12 sub-carriers within one TTI. Each sub-carrier on each symbol is referred to as one resource element (Resource Element, RE). Therefore, one PRB includes 12×14 REs, and each group of REs (including one or more REs) may be represented through (k, 1).

At this time, the user equipment may measure, according to each CSI measurement reference resource set of the at least two CSI measurement reference resource sets and the RS configuration corresponding to each CSI measurement reference resource set, CSI between the user equipment and the transmission point combination corresponding to each CSI measurement reference resource set, and obtain a feedback mechanism satisfying a requirement of the CSI between the user equipment and the transmission point combination.

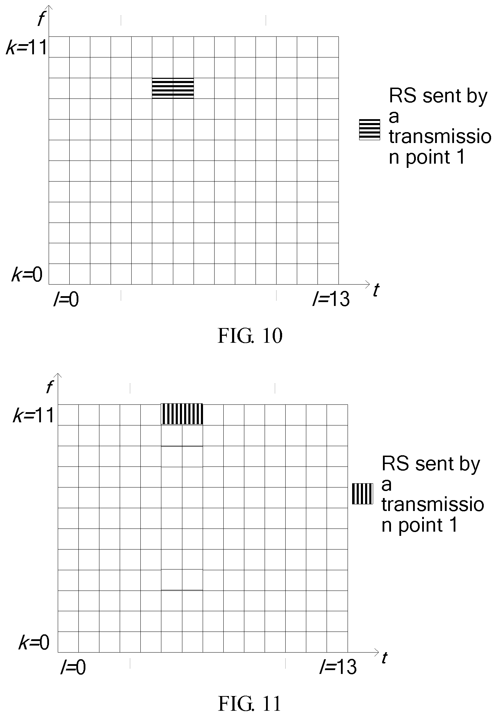

For example, two transmission points exist, which are a transmission point 1 and a transmission point 2. On TTIs at time points of 0, 10, 20, ..., (a first RS resource), a pattern of an RS sent by the transmission point 1 is as shown in FIG. 10. For the same PRB, the pattern of the RS sent by the transmission point 1 is two REs: (9, 5) and (9, 6).

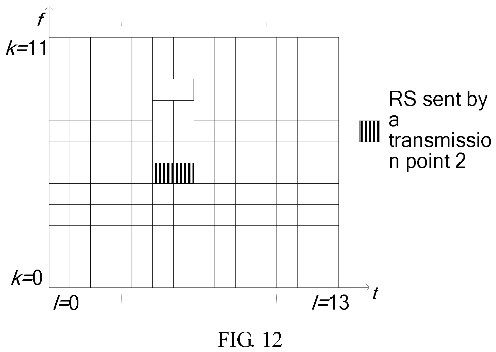

On TTIs whose serial numbers are 5, 15, 25, ..., (a second RS resource), patterns of RSs sent by the transmission point 1 and the transmission point 2 are as shown in FIG. 11 and FIG. 12. For the same PRB, the pattern of the RS sent by the transmission point 1 is two REs: (11, 5) and (11, 6), and the pattern of the RS sent by the transmission point 2 is two REs: (5, 5) and (5, 6). (11, 5), (11, 6), (5, 5), and (5, 6) form a 4-port RS pattern.

A first RS pattern that the base station configures for the UE is two REs: (9, 5) and (9, 6); and a second RS pattern that the base station configures for the UE is four REs: (11, 5), (11, 6), (5, 5), and (5, 6).

An RS measured by the UE on the TTIs at the time points of 0, 10, 20, ..., and on the two REs (9, 5) and (9, 6), which form the pattern of the RS, is sent from the transmission point 1, while the TTIs at the time points of 0, 10, 20, ..., belong to a first CSI measurement reference resource set. Therefore, the UE can obtain first CSI between the transmission point 1 and the UE according to the first CSI measurement reference resource set and the first RS pattern, and feed back the first CSI according to a feedback mechanism of the first CSI measurement reference resource set. An RS measured on the TTIs at the time points of 5, 15, 25, ..., and on the four REs (11, 5), (11, 6), (5, 5), and (5, 6), which form the pattern of the RS, is jointly sent by the transmission point 1 and the transmission point 2, while the TTIs at the time points of 5, 15, 25, ..., belong to a second CSI measurement reference resource set. Therefore, the UE can obtain second CSI between the UE and a combination of the transmission point 1 and that transmission point 2 according to the second CSI measurement reference resource set and the second RS pattern, and feed back the second CSI according to a feedback mechanism of the second CSI measurement reference resource set.

Specifically, the first CSI measurement reference resource set may be indicated by using a bitmap. Each bit of the bitmap corresponds to each TTI or TTI set. For example, if a value of a bit is "1", it indicates that a TTI or TTI set corresponding to the bit belongs to the first CSI measurement reference resource set; and if a value of a bit is "0", it indicates that a TTI or TTI set corresponding to the bit does not belong to the first CSI measurement reference resource set. The TTI set may be all TTIs within one RS period. Further, the second CSI measurement reference resource set may also be indicated by using a bitmap, and a specific method is similar to that of the first CSI measurement reference resource set, which is not described herein again.

For example, the length of the bitmap is 40 bits, which correspond to 40 consecutive TTIs. The first CSI measurement reference resource set may be represented by (10000 00000 10000 00000 10000 00000 10000 00000) or represented by (11111 00000 11111 00000 11111 00000 11111 00000).

When an RS resource adopts a frequency dimension, a method is similar to the foregoing method of the time dimension, as long as a TTI is replaced with a PRB, and a time point is replaced with a frequency.

FIG. 2 shows a user equipment according to an embodiment of the present invention. The user equipment includes: a receiving unit 21, a measurement obtaining unit 22, and a feedback unit 23.

The receiving unit 21 is configured to receive at least two channel state information CSI measurement reference resource sets sent by a base station, where reference signal RS resources included in different CSI measurement reference resource sets are different, RSs included in the different CSI measurement reference resource sets have different RS characteristics, and RSs included in the same CSI measurement reference resource set have the same RS characteristic.

The measurement obtaining unit 22 is configured to measure, according to each CSI measurement reference resource set of the at least two CSI measurement reference resource sets received by the receiving unit 21, CSI corresponding to each CSI measurement reference resource set, and obtain a feedback mechanism corresponding to each CSI measurement reference resource set.

Different CSI measurement reference resource sets in the at least two CSI measurement reference resource sets correspond to the same or different feedback mechanisms. The feedback mechanism may include a feedback mode, a feedback period, a frequency domain granularity, feedback triggering signaling, and the like.

The feedback unit 23 is configured to feed back a measurement result to the base station through the feedback mechanism obtained by the measurement obtaining unit 22.

The measurement result is CSI between the user equipment and any one or a combination of transmission points among at least two transmission points each corresponding to each CSI measurement reference resource set, and the transmission point is a device providing a service for the user equipment.

The receiving unit 21 is further configured to, when the measurement result that needs to be fed back by the feedback unit 23 to the base station through the feedback mechanism obtained by the measurement obtaining unit 22 is CSI between the user equipment and a transmission point combination, receive an RS configuration that is sent by the base station and corresponds to each CSI measurement reference resource set of the at least two CSI measurement reference resource sets, where the RS configuration includes at least one of the following information: the number of RS antenna ports, an RS pilot pattern, an RS period, and an RS sub-frame offset.

An RS pattern represents an RS sending time point and frequency point (referred to as a time-frequency grid point). A TTI serves as a time unit for sending of a signal. The length of one TTI is 1 ms, including 14 symbols. One physical resource block (Physical Resource Block, PRB) is 12 sub-carriers in one TTI. Each sub-carrier on each symbol is referred to as one resource element (Resource Element, RE). Therefore, one PRB includes 12×14 REs, and each group of REs (including one or more REs) may be represented through (k, 1).

The measurement obtaining unit 22 may further be configured to measure, according to each CSI measurement reference resource set received by the receiving unit 21 and the RS configuration corresponding to each CSI measurement reference resource set, CSI between the user equipment and the transmission point combination corresponding to each CSI measurement reference resource set, and obtain a feedback mechanism satisfying a requirement of the CSI between the user equipment and the transmission point combination.

A specific example is similar to the example in the method for obtaining channel state information shown in FIG. 1, which is not described herein again.

FIG. 3 shows another method for obtaining channel state information according to an embodiment of the present invention, and the method includes:
301: A base station sends at least two channel state information CSI measurement reference resource sets to a user equipment.

Further, the user equipment may be enabled to measure, according to each CSI measurement reference resource set of the at least two CSI measurement reference resource sets, CSI corresponding to each CSI measurement reference resource set, and obtain a feedback mechanism corresponding to each CSI measurement reference resource set.

Reference signal RS resources included in different CSI measurement reference resource sets are different; and RSs included in the different CSI measurement reference resource sets have different RS characteristics, and RSs included in the same CSI measurement reference resource set have the same RS characteristic. The RS resource is a time dimension resource (such as a sub-frame) or a frequency dimension resource (such as a sub-band) including an RS; the RS characteristic includes a transmission point that sends the RS, and a configuration of the RS; and the configuration of the RS includes the number of RS antenna ports, an RS pilot pattern, an RS period, and an RS sub-frame offset.

302: The base station receives a measurement result that is fed back by the user equipment to the base station through the feedback mechanism, where the measurement result is CSI between the user equipment and any one or a combination of transmission points among at least two transmission points each corresponding to each CSI measurement reference resource set.

The measurement result may be CSI between the user equipment and any one or a combination of transmission points among at least two transmission points each corresponding to each CSI measurement reference resource set; and the transmission point is a device providing a service for the user equipment, and specifically, the transmission point may be a device such as an antenna.

A specific example of another method for obtaining channel state information shown in FIG. 3 is similar to the example in the method for obtaining channel state information shown in FIG. 1, which is not described herein again.

FIG. 4 shows a base station according to an embodiment of the present invention. The base station includes: a sending unit 41 and a receiving unit 42.

The sending unit 41 is configured to send at least two channel state information CSI measurement reference resource sets to a user equipment, so that the user equipment measures, according to each CSI measurement reference resource set of the at least two CSI measurement reference resource sets, CSI corresponding to each CSI measurement reference resource set, and obtains a feedback mechanism corresponding to each CSI measurement reference resource set.

Reference signal RS resources included in different CSI measurement reference resource sets are different; and RSs included in the different CSI measurement reference resource sets have different RS characteristics, and RSs included in the same CSI measurement reference resource set have the same RS characteristic. The RS resource is a time dimension resource (such as a sub-frame) or a frequency dimension resource (such as a sub-band) including an RS; the RS characteristic includes a transmission point that sends the RS, and a configuration of the RS; and the configuration of the RS includes the number of RS antenna ports, an RS pilot pattern, an RS period, and an RS sub-frame offset.

The sending unit 41 may further be configured to, when a measurement result that needs to be fed back by the user equipment to the receiving unit 42 through the feedback mechanism is CSI between the user equipment and a transmission point combination, send an RS configuration corresponding to each CSI measurement reference resource set of the at least two CSI measurement reference resource sets to the user equipment.

The receiving unit 42 is configured to receive a measurement result that is fed back by the user equipment through the feedback mechanism obtained by the user equipment, where the measurement result is CSI between the user equipment and any one or a combination of transmission points among at least two transmission points each corresponding to each CSI measurement reference resource set, and the transmission point is a device providing a service for the user equipment.

The measurement result may be CSI between the user equipment and any one or a combination of transmission points among at least two transmission points each corresponding to each CSI measurement reference resource set; and the transmission point is a device providing a service for the user equipment, and specifically, the transmission point may be a device such as an antenna.

A specific example of the base station shown in FIG. 4 is similar to the example in the method for obtaining channel state information shown in FIG. 1, which is not described herein again.

With the method and apparatus for obtaining channel state information provided in the embodiments of the present invention, a user equipment adjusts a feedback mechanism according to different requirements on the feedback mechanism of CSI between the user equipment and different transmission points corresponding to CSI measurement reference resource sets sent by a base station, thereby solving a problem that a feedback mechanism is inflexible when obtaining CSI of wireless channels between different transmission points and a user equipment is implemented in the prior art.

The user equipment and the base station provided in the embodiments of the present invention can implement the foregoing method embodiments; and for specific function implementation, reference is made to the description in the method embodiments, which is not described herein again. The method and apparatus for obtaining channel state information provided in the embodiments of the present invention are applicable to the field of communications systems, but are not limited thereto.

Persons of ordinary skill in the art may understand that all or a part of the procedures of the methods according to the foregoing embodiments may be implemented by a program instructing relevant hardware. The program may be stored in a computer readable storage medium. When the program is run, the procedures of the methods according to the foregoing embodiments are performed. The storage medium may be a magnetic disk, an optical disk, a read-only memory (Read-Only Memory, ROM), or a random access memory (Random Access Memory, RAM).

The foregoing descriptions are only specific embodiments of the present invention, but are not intended to limit the protection scope of the present invention. Any variation or replacement that can be easily figured out by persons skilled in the art within the technical scope disclosed in the present invention shall all fall within the protection scope of the present invention. Therefore, the protection scope of the present invention shall be subject to the protection scope of the claims.

## Claims

1. A method for obtaining channel state information, comprising:
receiving (110), by a user equipment, at least two channel state information CSI measurement reference resource sets sent by a base station, wherein reference signal RS resources comprised in different CSI measurement reference resource sets are different, RSs comprised in the different CSI measurement reference resource sets have different RS characteristics, and RSs comprised in the same CSI measurement reference resource set have the same RS characteristic;
measuring (120), by the user equipment according to each CSI measurement reference resource set of the at least two CSI measurement reference resource sets, CSI corresponding to each CSI measurement reference resource set, and obtaining a feedback mechanism corresponding to each CSI measurement reference resource set such that the feedback mechanism corresponding to a first CSI measurement reference resource set differs from the feedback mechanism corresponding to a second CSI measurement reference resource set; and
feeding back (130), by the user equipment, a measurement result to the base station through the feedback mechanism corresponding to the CSI measurement reference source set corresponding to the measurement result, wherein the measurement result is the CSI between the user equipment and any one or a combination of transmission points among at least two transmission points each corresponding to each CSI measurement reference resource set, and the transmission point corresponds to one or more antennas;
wherein after the receiving, by the user equipment, at least two channel state information CSI measurement reference resource sets sent by a base station, the method further comprises:
when the measurement result that needs to be fed back by the user equipment to the base station through the feedback mechanism is CSI between the user equipment and a transmission point combination, receiving, by the user equipment, an RS configuration that is sent by the base station and corresponds to each channel state information CSI measurement reference resource set of the at least two channel state information CSI measurement reference resource sets, wherein the RS configuration comprises at least one of the following information: the number of RS antenna ports, an RS pilot pattern, an RS period, and an RS sub-frame offset; and
wherein the measuring, by the user equipment according to each CSI measurement reference resource set of the at least two CSI measurement reference resource sets, CSI corresponding to each CSI measurement reference resource set, and obtaining a feedback mechanism corresponding to each CSI measurement reference resource set comprises:
measuring, by the user equipment according to each CSI measurement reference resource set and the RS configuration corresponding to each CSI measurement reference resource set, CSI between the user equipment and the transmission point combination corresponding to each CSI measurement reference resource set, and obtaining a feedback mechanism satisfying a requirement of the CSI between the user equipment and the transmission point combination.

2. The method according to claim 1, wherein the RS resource is a time dimension resource or a frequency dimension resource; and
the RSs have the same characteristic, which comprises that: the RSs are sent by the same transmission point and the RSs have the same configuration, wherein the RSs have the same configuration, which comprises that: the RSs have the same number of antenna ports, the same RS pilot pattern, the same RS period, and the same RS sub-frame offset.

3. A user equipment, comprising:
a receiving unit (21), configured to receive at least two channel state information CSI measurement reference resource sets sent by a base station, wherein reference signal RS resources comprised in different CSI measurement reference resource sets are different, RSs comprised in the different CSI measurement reference resource sets have different RS characteristics, and RSs comprised in the same CSI measurement reference resource set have the same RS characteristic;
a measurement obtaining unit (22), configured to measure, according to each CSI measurement reference resource set of the at least two CSI measurement reference resource sets received by the receiving unit, CSI corresponding to each CSI measurement reference resource set, and obtain a feedback mechanism corresponding to each CSI measurement reference resource set such that the feedback mechanism corresponding to a first CSI measurement reference resource set differs from the feedback mechanism corresponding to a second CSI measurement reference resource set; and
a feedback unit (23), configured to feed back a measurement result to the base station through the feedback mechanism obtained by the measurement obtaining unit, the feedback mechanism corresponding to the CSI measurement reference source set corresponding to the measurement result, wherein the measurement result is CSI between the user equipment and any one or a combination of transmission points among at least two transmission points each corresponding to each CSI measurement reference resource set, and the transmission point corresponds to one or more antennas;
wherein the receiving unit is further configured to, when the measurement result that needs to be fed back by the feedback unit to the base station through the feedback mechanism obtained by the measurement obtaining unit is CSI between the user equipment and a transmission point combination, receive an RS configuration that is sent by the base station and corresponds to each CSI measurement reference resource set of the at least two CSI measurement reference resource sets, wherein the RS configuration comprises at least one of the following information: the number of RS antenna ports, an RS pilot pattern, an RS period, and an RS sub-frame offset; and
the measurement obtaining unit is further configured to measure, according to each CSI measurement reference resource set received by the receiving unit and the RS configuration corresponding to each CSI measurement reference resource set, CSI between the user equipment and the transmission point combination corresponding to each CSI measurement reference resource set, and obtain a feedback mechanism satisfying a requirement of the CSI between the user equipment and the transmission point combination.

4. The user equipment according to claim 3, wherein the RS resource comprised in the CSI measurement reference resource set received by the receiving unit is a time dimension resource or a frequency dimension resource; and
the RSs have the same characteristic, which comprises that: the RSs are sent by the same transmission point and the RSs have the same configuration, wherein the RSs have the same configuration, which comprises that: the RSs have the same number of antenna ports, the same RS pilot pattern, the same RS period, and the same RS sub-frame offset.

5. A method for obtaining channel state information, comprising:
sending (301), by a base station, at least two channel state information CSI measurement reference resource sets to a user equipment, so that the user equipment measures, according to each CSI measurement reference resource set of the at least two CSI measurement reference resource sets, CSI corresponding to each CSI measurement reference resource set, and obtains a feedback mechanism corresponding to each CSI measurement reference resource set such that the feedback mechanism corresponding to a first CSI measurement reference resource set differs from the feedback mechanism corresponding to a second CSI measurement reference resource set; and
receiving (302), by the base station, a measurement result that is fed back by the user equipment through the feedback mechanism corresponding to the CSI measurement reference source set corresponding to the measurement result, wherein the measurement result is CSI between the user equipment and any one or a combination of transmission points among at least two transmission points each corresponding to each CSI measurement reference resource set, and the transmission point corresponds to one or more antennas;
wherein after the sending, by a base station, at least two channel state information CSI measurement reference resource sets to a user equipment, the method further comprises:
when the measurement result that needs to be fed back by the user equipment to the base station through the feedback mechanism is CSI between the user equipment and a transmission point combination, sending, by the base station, an RS configuration corresponding to each channel state information CSI measurement reference resource set of the at least two channel state information CSI measurement reference resource sets to the user equipment, so that the user equipment measures, according to each CSI measurement reference resource set and the RS configuration corresponding to each CSI measurement reference resource set, CSI between the user equipment and the transmission point combination corresponding to each CSI measurement reference resource set, and obtains a feedback mechanism satisfying a requirement of the CSI between the user equipment and the transmission point combination.

6. The method according to claim 5, wherein the RS resource is a time dimension resource or a frequency dimension resource; and
the RSs have the same characteristic, which comprises that: the RSs are sent by the same transmission point and the RSs have the same configuration, wherein the RSs have the same configuration, which comprises that: the RSs have the same number of antenna ports, the same RS pilot pattern, the same RS period, and the same RS sub-frame offset.

7. Abase station, comprising:
a sending unit (41), configured to send at least two channel state information CSI measurement reference resource sets to a user equipment, so that the user equipment measures, according to each CSI measurement reference resource set of the at least two CSI measurement reference resource sets, CSI corresponding to each CSI measurement reference resource set, and obtains a feedback mechanism corresponding to each CSI measurement reference resource set such that the feedback mechanism corresponding to a first CSI measurement reference resource set differs from the feedback mechanism corresponding to a second CSI measurement reference resource set; and
a receiving unit (42), configured to receive a measurement result that is fed back by the user equipment through the feedback mechanism obtained by the user equipment, the feedback mechanism corresponding to the CSI measurement reference source set corresponding to the measurement result, wherein the measurement result is CSI between the user equipment and any one or a combination of transmission points among at least two transmission points each corresponding to each CSI measurement reference resource set, and the transmission point corresponds to one or more antennas;
wherein the sending unit is further configured to, when the measurement result that needs to be fed back by the user equipment to the receiving unity through the feedback mechanism is CSI between the user equipment and a transmission point combination, sending, by the receiving unit, an RS configuration corresponding to each channel state information CSI measurement reference resource set of the at least two channel state information CSI measurement reference resource sets to the user equipment, so that the user equipment measures, according to each CSI measurement reference resource set and the RS configuration corresponding to each CSI measurement reference resource set, CSI between the user equipment and the transmission point combination corresponding to each CSI measurement reference resource set, and obtains a feedback mechanism satisfying a requirement of the CSI between the user equipment and the transmission point combination.

8. The base station according to claim 7, wherein the RS resource comprised in the CSI measurement reference resource set sent by the sending unit is a time dimension resource or a frequency dimension resource; and
the RSs have the same characteristic, which comprises that: the RSs are sent by the same transmission point and the RSs have the same configuration, wherein the RSs have the same configuration, which comprises that: the RSs have the same number of antenna ports, the same RS pilot pattern, the same RS period, and the same RS sub-frame offset.

## Patentansprüche

1. Verfahren zum Erhalten von Kanalstatusinformationen, aufweisend:
Empfangen (110), durch ein Benutzerendgerät, von mindestens zwei durch eine Basisstation gesendeten Kanalstatusinformations-, CSI, Messreferenzressourcensätzen, wobei Referenzsignal-, RS, Ressourcen, die in unterschiedlichen CSI-Messreferenzressourcensätzen enthalten sind, unterschiedlich sind, RS, die in den unterschiedlichen CSI-Messreferenzressourcensätzen enthalten sind, unterschiedliche RS-Charakteristiken haben, und RS, die in dem gleichen CSI-Messreferenzressourcensatz enthalten sind, die gleiche RS-Charakteristik haben;
Messen (120), durch das Benutzerendgerät, gemäß jedem CSI-Messreferenzressourcensatz der mindestens zwei CSI-Messreferenzressourcensätze, von CSI entsprechend jedem CSI-Messreferenzressourcensatz, und Erhalten eines Feedback-Mechanismus entsprechend jedem CSI-Messreferenzressourcensatz, so dass der Feedback-Mechanismus, der einem ersten CSI-Messreferenzressourcensatz entspricht, sich von dem Feedback-Mechanismus unterscheidet, der einem zweiten CSI-Messreferenzressourcensatz entspricht; und
Rückkoppeln (130), durch das Benutzerendgerät, eines Messergebnisses an die Basisstation durch den Feedback-Mechanismus, der dem CSI-Messreferenzressourcensatz entspricht, der dem Messergebnis entspricht, wobei das Messergebnis die CSI zwischen dem Benutzerendgerät und irgendeinem oder einer Kombination von Übertragungspunkten unter mindestens zwei Übertragungspunkten, die jeweils jedem CSI-Messreferenzressourcensatz entsprechen, ist, und der Übertragungspunkt einer oder mehreren Antennen entspricht;
wobei nach dem Empfangen, durch das Benutzerendgerät, von mindestens zwei durch eine Basisstation gesendeten Kanalstatusinformations-, CSI, Messreferenzressourcensätzen das Verfahren ferner aufweist:
wenn das Messergebnis, das durch das Benutzerendgerät an die Basisstation durch den Feedback-Mechanismus rückgekoppelt werden soll, CSI zwischen dem Benutzerendgerät und einer Übertragungspunktkombination ist, Empfangen einer RS-Konfiguration durch das Benutzerendgerät, die von der Basisstation gesendet wurde und jedem Kanalstatusinformations-, CSI, Messreferenzressourcensatz der mindestens zwei Kanalstatusinformations-, CSI, Messreferenzressourcensätze entspricht, wobei die RS-Konfiguration mindestens eine der folgenden Informationen aufweist: die Anzahl der RS-Antennenports, ein RS-Pilotmuster, eine RS-Periode, und ein RS-Subrahmen-Versatz; und
wobei das Messen, durch das Benutzerendgerät, gemäß jedem CSI-Messreferenzressourcensatz der mindestens zwei CSI-Messreferenzressourcensätze, von CSI entsprechend jedem CSI-Messreferenzressourcensatz, und Erhalten eines Feedback-Mechanismus entsprechend jedem CSI-Messreferenzressourcensatz, aufweist:
Messen, durch das Benutzerendgerät, gemäß jedem CSI-Messreferenzressourcensatz und der RS-Konfiguration entsprechend jedem CSI-Messreferenzressourcensatz, von CSI zwischen dem Benutzerendgerät und der Übertragungspunktkombination entsprechend jedem CSI-Messreferenzressourcensatz, und Erhalten eines Feedback-Mechanismus, der eine Anforderung der CSI zwischen dem Benutzerendgerät und der Übertragungspunktkombination erfüllt.

2. Verfahren nach Anspruch 1, wobei die RS-Ressource eine Zeitdimensionsressource oder eine Frequenzdimensionsressource ist; und
die RS die gleiche Charakteristik haben, die aufweist, dass: die RS durch den gleichen Übertragungspunkt gesendet werden und die RS die gleiche Konfiguration haben, wobei die RS die gleiche Konfiguration haben, die aufweist, dass: die RS die gleiche Anzahl von Antennenports, das gleiche RS-Pilotmuster, die gleiche RS-Periode, und den gleichen RS-Subrahmen-Versatz haben.

3. Benutzerendgerät, aufweisend:
eine Empfangseinheit (21), die konfiguriert ist, mindestens zwei durch eine Basisstation gesendete Kanalstatusinformations-, CSI, Messreferenzressourcensätze zu empfangen, wobei in unterschiedlichen CSI-Messreferenzressourcensätzen enthaltene Referenzsignal-RS-Ressourcen unterschiedlich sind, RS, die in unterschiedlichen CSI-Messreferenzressourcensätzen enthalten sind, unterschiedliche RS-Charakteristiken haben, und RS, die in dem gleichen CSI-Messreferenzressourcensatz enthalten sind, die gleiche RS-Charakteristik haben;
eine Messungserlangungseinheit (22), die konfiguriert ist, gemäß jedem CSI-Messreferenzressourcensatz der mindestens zwei von der Empfangseinheit empfangenen CSI-Messreferenzressourcensätze, CSI entsprechend jedem CSI-Messreferenzressourcensatz zu messen, und einen Feedback-Mechanismus entsprechend jedem CSI-Messreferenzressourcensatz zu erhalten, so dass der Feedback-Mechanismus, der einem ersten CSI-Messreferenzressourcensatz entspricht, sich von dem einem Feedback-Mechanismus unterscheidet, der einem zweiten CSI-Messreferenzressourcensatz entspricht; und
eine Feedback-Einheit (23), die konfiguriert ist, durch den von der Messungserlangungseinheit erhaltenen Feedback-Mechanismus ein Messergebnis an die Basisstation rückzukoppeln, wobei der Feedback-Mechanismus dem CSI-Messreferenzressourcensatz entspricht, der dem Messergebnis entspricht, wobei das Messergebnis CSI zwischen dem Benutzerendgerät und irgendeinem oder einer Kombination von Übertragungspunkten unter mindestens zwei Übertragungspunkten ist, die jeweils jedem CSI-Messreferenzressourcensatz entsprechen, und der Übertragungspunkt einer oder mehreren Antennen entspricht;
wobei die Empfangseinheit ferner konfiguriert ist, wenn das Messergebnis, das von der Feedback-Einheit durch den Feedback-Mechanismus, der durch die Messungserlangungseinheit erhalten wird, an die Basisstation rückgekoppelt werden soll, CSI zwischen dem Benutzerendgerät und einer Übertragungspunktkombination ist, eine RS-Konfiguration zu empfangen, die von der Basisstation gesendet wird und jedem CSI-Messreferenzressourcensatz der mindestens zwei CSI-Messreferenzressourcensätze entspricht, wobei die RS-Konfiguration mindestens eine der folgenden Informationen aufweist: die Anzahl der RS-Antennenports, ein RS-Pilotmuster, eine RS-Periode, und einen RS-Subrahmen-Versatz; und
die Messungserlangungseinheit ferner konfiguriert ist, gemäß jedem von der Empfangseinheit empfangenen CSI-Messreferenzressourcensatz und der RS-Konfiguration entsprechend jedem CSI-Messreferenzressourcensatz, CSI zwischen dem Benutzerendgerät und der Übertragungspunktkombination, die jedem CSI-Messreferenzressourcensatz entspricht, zu messen, und einen Feedback-Mechanismus zu erhalten, der eine Anforderung der CSI zwischen der Benutzerendgerät und der Übertragungspunktkombination erfüllt.

4. Benutzerendgerät nach Anspruch 3, wobei die RS-Ressource, die in dem von der Empfangseinheit empfangenen CSI-Messreferenzressourcensatz enthalten ist, eine Zeitdimensionsressource oder eine Frequenzdimensionsressource ist; und
die RS die gleiche Charakteristik haben, die aufweist, dass: die RS durch den gleichen Übertragungspunkt gesendet werden und die RS die gleiche Konfiguration haben, wobei die RS die gleiche Konfiguration haben, die aufweist, dass: die RS die gleiche Anzahl von Antennenports, das gleiche RS-Pilotmuster, die gleiche RS-Periode, und den gleiche RS-Subrahmen-Versatz haben.

5. Verfahren zum Erhalten von Kanalstatusinformationen, aufweisend:
Senden (301), durch eine Basisstation, von mindestens zwei Kanalstatusinformations-, CSI, Messreferenzressourcensätzen an ein Benutzerendgerät, so dass das Benutzerendgerät, gemäß jedem CSI-Messreferenzressourcensatz der mindestens zwei CSI-Messreferenzressourcensätze, CSI entsprechend jedem CSI-Messreferenzressourcensatz misst und einen Feedback-Mechanismus entsprechend jedem CSI-Messreferenzressourcensatz erhält, so dass der Feedback-Mechanismus, der einem ersten CSI-Messreferenzressourcensatz entspricht, sich von dem Feedback-Mechanismus, der einem zweiten CSI-Messreferenzressourcensatz entspricht, unterscheidet; und
Empfangen (302), durch die Basisstation, eines Messergebnisses, das durch das Benutzerendgerät durch den Feedback-Mechanismus entsprechend dem CSI-Messreferenzressourcensatz, der dem Messergebnis entspricht, rückgekoppelt wird, wobei das Messergebnis CSI zwischen dem Benutzerendgerät und irgendeinem oder eine Kombination von Übertragungspunkten unter mindestens zwei Übertragungspunkten ist, die jeweils jedem CSI-Messreferenzressourcensatz entsprechen, und der Übertragungspunkt einer oder mehreren Antennen entspricht;
wobei nach dem Senden, durch eine Basisstation, von mindestens zwei Kanalstatusinformations-, CSI, Messreferenzressourcensätzen an ein Benutzerendgerät das Verfahren ferner aufweist:
wenn das Messergebnis, das von dem Benutzerendgerät an die Basisstation durch den Feedback-Mechanismus rückgekoppelt werden soll, CSI zwischen dem Benutzerendgerät und einer Übertragungspunktkombination ist, Senden, durch die Basisstation, einer RS-Konfiguration entsprechend jedem Kanalstatusinformations-, CSI, Messreferenzressourcensatz der mindestens zwei Kanalstatusinformations-, CSI, Messreferenzressourcensätze an das Benutzerendgerät, so dass das Benutzerendgerät, gemäß jedem CSI-Messreferenzressourcensatz und der jedem CSI-Messreferenzressourcensatz entsprechenden RS-Konfiguration, CSI zwischen dem Benutzerendgerät und der Übertragungspunktkombination, die jedem CSI-Messreferenzressourcensatz entspricht, misst, und einen Feedback-Mechanismus erhält, der eine Anforderung der CSI zwischen dem Benutzerendgerät und der Übertragungspunktkombination erfüllt.

6. Verfahren nach Anspruch 5, wobei die RS-Ressource eine Zeitdimensionsressource oder eine Frequenzdimensionsressource ist; und
die RS die gleiche Charakteristik haben, die aufweist, dass: die RS durch den gleichen Übertragungspunkt gesendet werden und die RS die gleiche Konfiguration haben, wobei die RS die gleiche Konfiguration haben, die aufweist, dass: die RS die gleiche Anzahl von Antennenports, das gleiche RS-Pilotmuster, die gleiche RS-Periode, und den gleichen RS-Subrahmen-Versatz haben.

7. Basisstation, aufweisend:
eine Sendeeinheit (41), die konfiguriert ist, mindestens zwei Kanalstatusinformations-, CSI, Messreferenzressourcensätze an ein Benutzerendgerät zu senden, so dass das Benutzerendgerät, gemäß jedem CSI-Messreferenzressourcensatz der mindestens zwei CSI-Messreferenzressourcensätze, CSI entsprechend jedem CSI-Messreferenzressourcensatz misst und einen Feedback-Mechanismus entsprechend jedem CSI-Messreferenzressourcensatz erhält, so dass der Feedback-Mechanismus, der einem ersten CSI-Messreferenzressourcensatz entspricht, sich von dem Feedback-Mechanismus, der einem zweiten CSI-Messreferenzressourcensatz entspricht, unterscheidet; und
eine Empfangseinheit (42), die konfiguriert ist, ein Messergebnis zu empfangen, das durch das Benutzerendgerät über den von der Benutzerendgerät erhaltenen Feedback-Mechanismus rückgekoppelt wird, wobei der Feedback-Mechanismus dem CSI-Messreferenzressourcensatz entspricht, der dem Messergebnis entspricht, wobei das Messergebnis CSI zwischen dem Benutzerendgerät und irgendeinem oder einer Kombination von Übertragungspunkten unter mindestens zwei Übertragungspunkten ist, die jeweils jedem CSI-Messreferenzressourcensatz entsprechen, und der Übertragungspunkt einer oder mehreren Antennen entspricht;
wobei die Sendeeinheit ferner konfiguriert ist, wenn das Messergebnis, das durch das Benutzerendgerät an die Empfangseinheit durch den Feedback-Mechanismus rückgekoppelt werden soll, CSI zwischen dem Benutzerendgerät und einer Übertragungspunktkombination ist, durch die Empfangseinheit eine RS-Konfiguration entsprechend jedem Kanalstatusinformations-, CSI, Messreferenzressourcensatz der mindestens zwei Kanalstatusinformations-, CSI, Messreferenzressourcensätze an das Benutzerendgerät zu senden, so dass das Benutzerendgerät, gemäß jedem CSI-Messreferenzressourcensatz und der RS Konfiguration entsprechend jedem CSI-Messreferenzressourcensatz, CSI zwischen dem Benutzerendgerät und der Übertragungspunktkombination misst, die jedem CSI-Messreferenzressourcensatz entspricht, und einen Feedback-Mechanismus erhält, der eine Anforderung der CSI zwischen dem Benutzerendgerät und der Übertragungspunktkombination erfüllt.

8. Basisstation nach Anspruch 7, wobei die RS-Ressource, die in dem von der Sendeeinheit gesendeten CSI-Messreferenzressourcensatz enthalten ist, eine Zeitdimensionsressource oder eine Frequenzdimensionsressource ist; und
die RS haben die gleiche Charakteristik haben, die aufweist, dass: die RS durch den gleichen Übertragungspunkt gesendet werden und die RS die gleiche Konfiguration haben, wobei die RS die gleiche Konfiguration haben, die aufweist, dass: die RS die gleiche Anzahl von Antennenports, das gleiche RS-Pilotmuster, die gleiche RS-Periode, und den gleichen RS-Subrahmen-Versatz haben.

## Revendications

1. Procédé pour obtenir des informations d'état de canal, consistant :
à recevoir (110), au moyen d'un équipement utilisateur, au moins deux ensembles de ressources de référence de mesure d'informations d'état de canal, CSI, envoyés par une station de base, dans lequel des ressources de signal de référence, RS, incluses dans différents ensembles de ressources de référence de mesure d'informations CSI sont différentes, des signaux RS inclus dans les différents ensembles de ressources de référence de mesure d'informations CSI présentent différentes caractéristiques de signal RS et des signaux RS inclus le même ensemble de ressources de référence de mesure d'informations CSI présentent la même caractéristique de signal RS ;
à mesurer (120), au moyen de l'équipement utilisateur en fonction de chaque ensemble de ressources de référence de mesure d'informations CSI des deux, ou plus, ensembles de ressources de référence de mesure d'informations CSI, des informations CSI correspondant à chaque ensemble de ressources de référence de mesure d'informations CSI, et à obtenir un mécanisme de renvoi correspondant à chaque ensemble de ressources de référence de mesure d'informations CSI de telle sorte que le mécanisme de renvoi correspondant à un premier ensemble de ressources de référence de mesure d'informations CSI soit différent du mécanisme de renvoi correspondant à un second ensemble de ressources de référence de mesure d'informations CSI ; et
à renvoyer (130), au moyen de l'équipement utilisateur, un résultat de mesure à la station de base par le biais du mécanisme de renvoi correspondant à l'ensemble de sources de référence de mesure d'informations CSI correspondant au résultat de mesure, dans lequel le résultat de mesure constitue les informations CSI entre l'équipement utilisateur et un point de transmission quelconque ou une combinaison de points de transmission parmi au moins deux points de transmission correspondant chacun à chaque ensemble de ressources de référence de mesure d'informations CSI, et le point de transmission correspond à une ou plusieurs antennes ;
dans lequel, après la réception, par l'équipement utilisateur, d'au moins deux ensembles de ressources de référence de mesure d'informations d'état de canal, CSI, envoyés par une station de base, le procédé consiste en outre :
lorsque le résultat de mesure qui doit être renvoyé par l'équipement utilisateur à la station de base par le biais du mécanisme de renvoi constitue des informations CSI entre l'équipement utilisateur et une combinaison de points de transmission, à recevoir, au moyen de l'équipement utilisateur, une configuration de signal RS qui est envoyée par la station de base et correspond à chaque ensemble de ressources de référence de mesure d'informations d'état de canal, CSI, des deux, ou plus, ensembles de ressources de référence de mesure d'informations d'état de canal, CSI, dans lequel la configuration de signal RS comprend au moins l'une des informations suivantes : le nombre de ports d'antenne de signal RS, un motif de pilote de signal RS, une période de signal RS et un décalage de sous-trame de signal RS ; et
dans lequel la mesure, au moyen de l'équipement utilisateur en fonction de chaque ensemble de ressources de référence de mesure d'informations CSI des deux, ou plus, ensembles de ressources de référence de mesure d'informations CSI, d'informations CSI correspondant à chaque ensemble de ressources de référence de mesure d'informations CSI, et l'obtention d'un mécanisme de renvoi correspondant à chaque ensemble de ressources de référence de mesure d'informations CSI consistent :
à mesurer, au moyen de l'équipement utilisateur en fonction de chaque ensemble de ressources de référence de mesure d'informations CSI et de la configuration de signal RS correspondant à chaque ensemble de ressources de référence de mesure d'informations CSI, des informations CSI entre l'équipement utilisateur et la combinaison de points de transmission correspondant à chaque ensemble de ressources de référence de mesure d'informations CSI, et à obtenir un mécanisme de renvoi répondant à une exigence des informations CSI entre l'équipement utilisateur et la combinaison de points de transmission.

2. Procédé selon la revendication 1, dans lequel la ressource de signal RS est une ressource de dimension temporelle ou une ressource de dimension fréquentielle ; et les signaux RS présentent la même caractéristique, ce qui comprend que : les signaux RS sont envoyés par le même point de transmission et les signaux RS présentent la même configuration, dans lequel les signaux RS présentent la même configuration, ce qui comprend que : les signaux RS présentent le même nombre de ports d'antenne, le même motif de pilote de signal RS, la même période de signal RS et le même décalage de sous-trame de signal RS.

3. Équipement utilisateur comprenant :
une unité de réception (21), configurée pour recevoir au moins deux ensembles de ressources de référence de mesure d'informations d'état de canal, CSI, envoyés par une station de base, dans lequel des ressources de signal de référence, RS, incluses dans différents ensembles de ressources de référence de mesure d'informations CSI sont différentes, des signaux RS inclus dans les différents ensembles de ressources de référence de mesure d'informations CSI présentent différentes caractéristiques de signal RS et des signaux RS inclus le même ensemble de ressources de référence de mesure d'informations CSI présentent la même caractéristique de signal RS ;
une unité d'obtention de mesure (22), configurée pour mesurer, en fonction de chaque ensemble de ressources de référence de mesure d'informations CSI des deux, ou plus, ensembles de ressources de référence de mesure d'informations CSI reçus par l'unité de réception, des informations CSI correspondant à chaque ensemble de ressources de référence de mesure d'informations CSI, et pour obtenir un mécanisme de renvoi correspondant à chaque ensemble de ressources de référence de mesure d'informations CSI de telle sorte que le mécanisme de renvoi correspondant à un premier ensemble de ressources de référence de mesure d'informations CSI soit différent du mécanisme de renvoi correspondant à un second ensemble de ressources de référence de mesure d'informations CSI ; et
une unité de renvoi (23), configurée pour renvoyer un résultat de mesure à la station de base par le biais du mécanisme de renvoi obtenu par l'unité d'obtention de mesure, le mécanisme de renvoi correspondant à l'ensemble de sources de référence de mesure d'informations CSI correspondant au résultat de mesure, dans lequel le résultat de mesure constitue des informations CSI entre l'équipement utilisateur et un point de transmission quelconque ou une combinaison de points de transmission parmi au moins deux points de transmission correspondant chacun à chaque ensemble de ressources de référence de mesure d'informations CSI, et le point de transmission correspond à une ou plusieurs antennes ;
dans lequel l'unité de réception est en outre configurée, lorsque le résultat de mesure qui doit être renvoyé par l'unité de renvoi à la station de base par le biais du mécanisme de renvoi obtenu par l'unité d'obtention de mesure constitue des informations CSI entre l'équipement utilisateur et une combinaison de points de transmission, pour recevoir une configuration de signal RS qui est envoyée par la station de base et correspond à chaque ensemble de ressources de référence de mesure d'informations CSI des deux, ou plus, ensembles de ressources de référence de mesure d'informations CSI, dans lequel la configuration de signal RS comprend au moins l'une des informations suivantes : le nombre de ports d'antenne de signal RS, un motif de pilote de signal RS, une période de signal RS et un décalage de sous-trame de signal RS ; et
l'unité d'obtention de mesure est en outre configurée pour mesurer, en fonction de chaque ensemble de ressources de référence de mesure d'informations CSI reçu par l'unité de réception et de la configuration de signal RS correspondant à chaque ensemble de ressources de référence de mesure d'informations CSI, des informations CSI entre l'équipement utilisateur et la combinaison de points de transmission correspondant à chaque ensemble de ressources de référence de mesure d'informations CSI, et pour obtenir un mécanisme de renvoi répondant à une exigence des informations CSI entre l'équipement utilisateur et la combinaison de points de transmission.

4. Équipement utilisateur selon la revendication 3, dans lequel la ressource de signal RS incluse dans l'ensemble de ressources de référence de mesure d'informations CSI reçu par l'unité de réception est une ressource de dimension temporelle ou une ressource de dimension fréquentielle ; et
les signaux RS présentent la même caractéristique, ce qui comprend que : les signaux RS sont envoyés par le même point de transmission et les signaux RS présentent la même configuration, dans lequel les signaux RS présentent la même configuration, ce qui comprend que : les signaux RS présentent le même nombre de ports d'antenne, le même motif de pilote de signal RS, la même période de signal RS et le même décalage de sous-trame de signal RS.

5. Procédé pour obtenir des informations d'état de canal, consistant :
à envoyer (301), au moyen d'une station de base, au moins deux ensembles de ressources de référence de mesure d'informations d'état de canal, CSI, à un équipement utilisateur de telle sorte que l'équipement utilisateur mesure, en fonction de chaque ensemble de ressources de référence de mesure d'informations CSI des deux, ou plus, ensembles de ressources de référence de mesure d'informations CSI, des informations CSI correspondant à chaque ensemble de ressources de référence de mesure d'informations CSI, et obtienne un mécanisme de renvoi correspondant à chaque ensemble de ressources de référence de mesure d'informations CSI de telle sorte que le mécanisme de renvoi correspondant à un premier ensemble de ressources de référence de mesure d'informations CSI soit différent du mécanisme de renvoi correspondant à un second ensemble de ressources de référence de mesure d'informations CSI ; et
à recevoir (302), au moyen de la station de base, un résultat de mesure qui est renvoyé par l'équipement utilisateur par le biais du mécanisme de renvoi correspondant à l'ensemble de sources de référence de mesure d'informations CSI correspondant au résultat de mesure, dans lequel le résultat de mesure constitue des informations CSI entre l'équipement utilisateur et un point de transmission quelconque ou une combinaison de points de transmission parmi au moins deux points de transmission correspondant chacun à chaque ensemble de ressources de référence de mesure d'informations CSI, et le point de transmission correspond à une ou plusieurs antennes ;
dans lequel, après l'envoi, par une station de base, d'au moins deux ensembles de ressources de référence de mesure d'informations d'état de canal, CSI, à un équipement utilisateur, le procédé consiste en outre :
lorsque le résultat de mesure qui doit être renvoyé par l'équipement utilisateur à la station de base par le biais du mécanisme de renvoi constitue des informations CSI entre l'équipement utilisateur et une combinaison de points de transmission, à envoyer, au moyen de la station de base, une configuration de signal RS correspondant à chaque ensemble de ressources de référence de mesure d'informations d'état de canal, CSI, des deux, ou plus, ensembles de ressources de référence de mesure d'informations d'état de canal, CSI, à l'équipement utilisateur, de telle sorte que l'équipement utilisateur mesure, en fonction de chaque ensemble de ressources de référence de mesure d'informations CSI et de la configuration de signal RS correspondant à chaque ensemble de ressources de référence de mesure d'informations CSI, des informations CSI entre l'équipement utilisateur et la combinaison de points de transmission correspondant à chaque ensemble de ressources de référence de mesure d'informations CSI, et obtienne un mécanisme de renvoi répondant à une exigence des informations CSI entre l'équipement utilisateur et la combinaison de points de transmission.

6. Procédé selon la revendication 5, dans lequel la ressource de signal RS est une ressource de dimension temporelle ou une ressource de dimension fréquentielle ; et les signaux RS présentent la même caractéristique, ce qui comprend que : les signaux RS sont envoyés par le même point de transmission et les signaux RS présentent la même configuration, dans lequel les signaux RS présentent la même configuration, ce qui comprend que : les signaux RS présentent le même nombre de ports d'antenne, le même motif de pilote de signal RS, la même période de signal RS et le même décalage de sous-trame de signal RS.

7. Station de base comprenant :
une unité d'envoi (41), configurée pour envoyer au moins deux ensembles de ressources de référence de mesure d'informations d'état de canal, CSI, à un équipement utilisateur de telle sorte que l'équipement utilisateur mesure, en fonction de chaque ensemble de ressources de référence de mesure d'informations CSI des deux, ou plus, ensembles de ressources de référence de mesure d'informations CSI, des informations CSI correspondant à chaque ensemble de ressources de référence de mesure d'informations CSI, et obtienne un mécanisme de renvoi correspondant à chaque ensemble de ressources de référence de mesure d'informations CSI de telle sorte que le mécanisme de renvoi correspondant à un premier ensemble de ressources de référence de mesure d'informations CSI soit différent du mécanisme de renvoi correspondant à un second ensemble de ressources de référence de mesure d'informations CSI ; et
une unité de réception (42), configurée pour recevoir un résultat de mesure qui est renvoyé par l'équipement utilisateur par le biais du mécanisme de renvoi obtenu par l'équipement utilisateur, le mécanisme de renvoi correspondant à l'ensemble de sources de référence de mesure d'informations CSI correspondant au résultat de mesure, dans laquelle le résultat de mesure constitue des informations CSI entre l'équipement utilisateur et un point de transmission quelconque ou une combinaison de points de transmission parmi au moins deux points de transmission correspondant chacun à chaque ensemble de ressources de référence de mesure d'informations CSI, et le point de transmission correspond à une ou plusieurs antennes ;
dans laquelle l'unité d'envoi est en outre configurée, lorsque le résultat de mesure qui doit être renvoyé par l'équipement utilisateur à l'unité de réception par le biais du mécanisme de renvoi constitue des informations CSI entre l'équipement utilisateur et une combinaison de points de transmission, pour envoyer, au moyen de l'unité de réception, une configuration de signal RS correspondant à chaque ensemble de ressources de référence de mesure d'informations d'état de canal, CSI, des deux, ou plus, ensembles de ressources de référence de mesure d'informations d'état de canal, CSI, à l'équipement utilisateur, de telle sorte que l'équipement utilisateur mesure, en fonction de chaque ensemble de ressources de référence de mesure d'informations CSI et de la configuration de signal RS correspondant à chaque ensemble de ressources de référence de mesure d'informations CSI, des informations CSI entre l'équipement utilisateur et la combinaison de points de transmission correspondant à chaque ensemble de ressources de référence de mesure d'informations CSI, et obtienne un mécanisme de renvoi répondant à une exigence des informations CSI entre l'équipement utilisateur et la combinaison de points de transmission.

8. Station de base selon la revendication 7, dans laquelle la ressource de signal RS incluse dans l'ensemble de ressources de référence de mesure d'informations CSI envoyé par l'unité d'envoi est une ressource de dimension temporelle ou une ressource de dimension fréquentielle ; et
les signaux RS présentent la même caractéristique, ce qui comprend que : les signaux RS sont envoyés par le même point de transmission et les signaux RS présentent la même configuration, dans laquelle les signaux RS présentent la même configuration, ce qui comprend que : les signaux RS présentent le même nombre de ports d'antenne, le même motif de pilote de signal RS, la même période de signal RS et le même décalage de sous-trame de signal RS.
